# EUROPEAN PATENT APPLICATION

(11) **EP 1 555 662 A2**
(43) Date of publication of application: **20.07.2005**
(21) Application number: 05000584.2
(22) Date of filing: 13.01.2005
(51) Int. Cl.: G11B 7/125, G11B 7/135

(54) **Two wavelength laser module and optical pickup device**

(30) Priority: 14.01.2004 JP 2004006540
(71) Applicant: Pioneer Corporation, Meguro-ku, Tokyo (JP)
(72) Inventor: Ogasawara, Masakazu, Tsurugashima-shi Saitama 350-2288 (JP); Sato, Makoto, Tsurugashima-shi Saitama 350-2288 (JP); Miyachi, Mamoru, Tsurugashima-shi Saitama 350-2288 (JP); Kimura, Yoshinori, Tsurugashima-shi Saitama 350-2288 (JP)
(74) Representative: Betten & Resch

(57) **Abstract**

A two wavelength laser module (10) is made up of a semiconductor laser assembly (11) that includes a first semiconductor laser (LD1) for emitting a first light beam of a first polarization direction and a second semiconductor laser (LD2) for emitting a second light beam of a second polarization direction. The second light beam is emitted approximately in the same direction as that of the first light beam and has a shorter wavelength than that of the first light beam. The first and second semiconductor lasers are disposed on a substrate. The module includes a polarization diffraction element (12) for causing a divergence angle (θ₁) of the first light beam to differ from that (θ₂) of the second light beam.

## Description

### BACKGROUND OF THE INVENTION

### 1. Field of the Invention

The present invention relates to a two wavelength laser module, and more particularly, to the two wavelength laser module which emits two light beams of different wavelengths for an optical pickup device which is capable of reading data out of recording media of different types.

### 2. Description of the Related Art

Optical discs as storage media serve as means which are widely used for data such as video, voice, or computer data being written and read thereon. For example, optical discs called "DVDs" (Digital Versatile Discs) have become commercially available. On the other hand, the DVDs employ an optical pickup device which typically includes an optical source of wavelength 635 nm and an objective lens having a numerical aperture NA of 0.6.

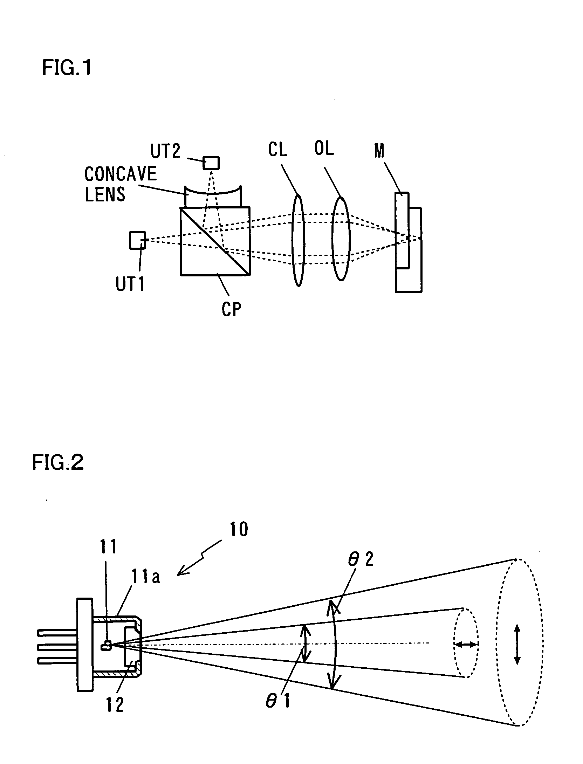

Fig. 1 shows an example of a compatible pickup device compatible with a conventional CD and DVD. The pickup device has a light source unit UT1 for emitting a beam of wavelength 780 nm, a light source unit UT2 for emitting a beam of wavelength 635 nm, a combined prism CP, a collimator lens CL, and an objective lens OL, which are disposed in that order. In this configuration, the optical system from the combined prism to a storage medium is shared for CDs and DVDs, thus in either case, each light beam emitted from the light source unit is adapted to pass through the combined prism onto a storage medium M.

However, the configuration of the conventional compatible pickup device further requires optical components such as a concave lens in addition to the combined prism CP in order to enhance the efficiency of using one light beam to the storage medium, ending up with a large number of components involved therein. Additionally, the two light source units need to be aligned with the combined prism, thus requiring a complicated arrangement (see Japanese Patent Laid-Open Publication No. 2001-184707).

Recently, further enhanced storage capacities have been increasingly demanded, so that the next generation disc (hereinafter referred to as BDs) is being developed which can store information at a higher density than DVDs. Typically, the BD employs a wavelength of 405 nm and an objective lens of NA 0.85. Thus, the BD and DVD have different specifications with respect to the wavelength and the NA of the objective lens.

For the CD and DVD, a two wavelength pickup device has been developed for use with so-called compatible drive operations. Accordingly, in order for one player to reproduce data on discs of different types such as BDs and DVDs, an attempt to develop a so-called two wavelength laser module has been made which includes optical sources of two wavelengths 650 nm and 405 nm.

In general, a semiconductor laser emits a light beam of a far field pattern (FFP) which has considerably different divergence angles of beams between in the directions perpendicular and parallel to the heterojunctions because of a large aspect ratio (the ratio of the width in millimeter to the thickness in nanometer of the waveguide) on the edge of the active layer. An FFP image and a near field pattern (NFP) image have a Fourier transform relationship. In general, semiconductor lasers of a longer emission wavelength tend to have a larger angle of radiation. For this reason, with a device in which two semiconductor lasers of two wavelengths of 650 nm and 405 nm are packaged in close proximity to each other, it is difficult to significantly reduce the divergence angle of the beam of wavelength 650 nm with respect to that of wavelength 405 nm.

### SUMMARY OF THE INVENTION

It is therefore an object of the present invention to provide a two wavelength laser module, for use with a pickup device or the like, which can simplify the configuration of a system employing multiple light beams of different wavelengths and restrict the divergence angle of the light beam as well.

A two wavelength laser module according to the present invention comprises a semiconductor laser assembly that includes a first semiconductor laser for emitting a first light beam of a first polarization direction and a second semiconductor laser for emitting a second light beam of a second polarization direction. The second light beam is emitted approximately in the same direction as that of the first light beam and has a shorter wavelength than that of the first light beam. The first and second semiconductor lasers are disposed on a substrate. The module includes a polarization diffraction element for causing a divergence angle of the first light beam to differ from that of the second light beam.

### BRIEF DESCRIPTION OF THE DRAWINGS

Fig. 1 is a view showing an example of configuration of a conventional pickup device;
Fig. 2 is a partial sectional view showing a two wavelength laser module according to an embodiment of the present invention;
Fig. 3 is a partial sectional view showing a semiconductor laser assembly in a two wavelength laser module according to an embodiment of the present invention;
Fig. 4 is a partial sectional view showing a polarization diffraction element in a two wavelength laser module according to an embodiment of the present invention;
Figs. 5 and 6 are partial sectional views each showing the operation of a polarization diffraction element in a two wavelength laser module according to an embodiment of the present invention;
Fig. 7 is a partial sectional view showing the operation of a polarization diffraction element in a two wavelength laser module according to an example of the present invention;
Figs. 8 to 13 are partial sectional views each showing the operation of a polarization diffraction element in a two wavelength laser module according to other examples of the present invention;
Fig. 14 is a schematic view showing the configuration of a pickup device employing a two wavelength laser module according to the present invention; and
Figs. 15 to 17 are partial sectional views each showing the operation of a polarization diffraction element in a two wavelength laser module according to an implementation of the present invention.

### DETAILED DESCRIPTION OF THE INVENTION

Now, embodiments of the present invention will be described below in more detail with reference to the accompanying drawings.

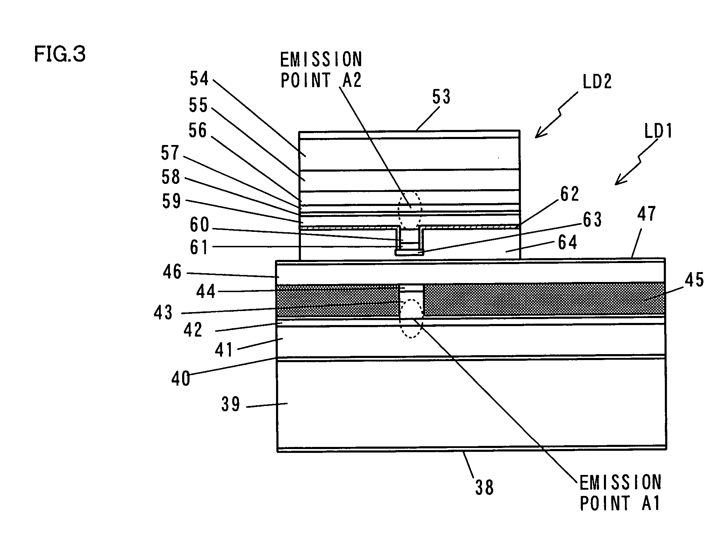

As shown in Fig. 2, an example of a two wavelength laser module 10 has a semiconductor laser assembly 11 and a polarization diffraction element 12, which are integrated and accommodated in a casing member 11a. The semiconductor laser assembly 11 is fixed to a base (not shown) inside the case, and the polarization diffraction element 12 is fixed on the opening thereof. For example, as shown in Fig. 3, the semiconductor laser assembly 11, which emits light beams of two types of wavelength, includes a first semiconductor laser LD1 that emits a first light beam for reading DVDs and a second semiconductor laser LD2 that emits a second light beam for reading BDs. That is, the first semiconductor laser LD1 emits a first light beam of a first wavelength, e.g., a red beam of 635 nm, while the second semiconductor laser LD2 emits a second light beam of a second wavelength, e.g., a blue beam of 405 nm, which is shorter in wavelength than the red light beam. The first and second semiconductor lasers are integrally constructed so as to emit the red and blue beams in the same direction with the polarization directions of both the beams being different from each other by about 90 degrees. The polarization diffraction element 12 serves as an optical element such as a lens to act upon polarization of only one of the beams. The optical axes of the red and blue beams are substantially parallel to each other.

The semiconductor laser assembly 11 is designed such that the first and second semiconductor lasers LD1 and LD2 are provided with toggle control in response to a control signal from a laser drive portion (not shown), thereby selectively emitting the red or blue beams.

As illustrated by dotted lines in Fig. 2, the red and blue beams emitted are elliptical in cross section but may also be circular. As illustrated, the vertical and horizontal arrows show the polarization directions of both the light beams, which are orthogonal to each other. For example, as illustrated, the polarization diffraction element 12 of the two wavelength laser module has a function of causing a beam divergence angle θ1 of the red beam to be less than a beam divergence angle θ2 of the blue beam, i.e. , causing both the beams to differ from each other. That is, the polarization diffraction element 12 positioned on the emission side of both the beams serves either as a convex lens to act only upon the polarization of the red beam or as a concave lens to act only upon the polarization of the blue beam. The divergence angles of the beams emitted from the two semiconductor lasers LD1 and LD2 into the polarization diffraction element 12 may be different from each other.

### [Semiconductor laser assembly]

In general, a semiconductor laser has a greater reflectivity at its resonator edge face for the TE polarization having an electric field vector (polarization plane) parallel to the active layer than for the TM polarization having an electric field vector component perpendicular to the active layer. A semiconductor laser with an active layer having a strain-free or compressive-strain quantum well structure is generally dominated by the TE polarization because the ground state of holes is at the first quantum level of heavy holes at which the optical transition probability is higher for the TE polarization.

In contrast to this, using a quantum well active layer having tensile strain in the well layer could bring the ground state of holes to the first quantum level of light holes at which the optical transition probability is higher for the TM polarization, thus realizing a laser emission predominantly including the TM polarization. The TM mode emission is implemented in ranges about wavelengths of 635 nm and 650 nm using an AlGaInP-based semiconductor laser fabricated on a GaAs substrate.

On the other hand, a GaN-based semiconductor laser having a range about a wavelength of 405 nm will predominantly consist of the TE polarization because compressive stress acts upon the active layer of InGaN.

Accordingly, the AlGaInP-based semiconductor laser with the quantum well active layer having tensile stress in the well layer of the active layer and the GaN-based semiconductor laser can be integrated to fabricate the first and second semiconductor lasers LD1 and LD2 which emit beams having polarization directions different from each other.

Fig. 3 illustrates a cross section of a chip in the semiconductor laser assembly 11. As shown in Fig. 3, the semiconductor laser assembly 11 has a one-chip hybrid type structure, in which the first semiconductor laser LD1 having a first emission point A1 for emitting a red beam of wavelength 635 nm and the second semiconductor laser LD2 having a second emission point A2 for emitting a blue beam of wavelength 405 nm are stacked to be formed on one principal face of a single GaAs substrate 39. The emission face of the first semiconductor laser LD1 having the first emission point A1 and that of the second semiconductor laser LD2 having the second emission point A2 are generally flush with each other.

Sequentially from the n-GaAs(001) substrate 39 opposite to an n-electrode 38 of two layer Cr/Al film, the first semiconductor laser LD1 has an n-GaAs buffer layer 40, an n-AlGaInP-based cladding layer 41, a strained quantum well active layer 42, a ridge stripe made up of a p-AlGaInP-based cladding layer 43 and a p-GaInP-based conducting layer 44, an n-GaAs-based current blocking layer 45 disposed on both sides of the ridge stripe, a p-GaAs-based contact layer 46 coated on top of the ridge stripe and the current blocking layer, and a p-electrode 47. The ridge stripe is formed in a trapezoidal shape by etching or the like. The n-GaAs layer 45 is formed so as to cover the cladding layer 43 except the trapezoidal upper surface of the ridge stripe. Carriers are supplied only through the trapezoidal top surface of the conducting layer 44. The first emission point A1 is located at the strained quantum well active layer 42.

Sequentially from the principal surface of the n-GaN-based underlying layer 54 opposite to an n-electrode 53 of two layer Ti/Au film, the second semiconductor laser LD2 has an n-AlGaN-based n-cladding layer 55, an n-GaN-based n-guiding layer 56, a multi quantum well active layer 57 made up of an InGaN-based barrier layer and an InGaN-based well layer, an AlGaN-based electron barrier layer 58, a p-GaN-based p-guiding layer 59, a ridge stripe made up of a p-AlGaN-based p-cladding layer 60 and a p-GaN-based p-contact layer 61, a SiO₂ insulating layer 62 for coating the p-GaN-based p-guiding layer 59 and the ridge stripe except the top face of the contact layer, and a p-electrode 63 on the p-contact layer. Only the p-contact layer 61 is electrically connected to the p-electrode 63.

The first and second semiconductor lasers LD1 and LD2 are electrically connected to each other in a manner such that the p-electrode side face of the first semiconductor laser LD1 is affixed to the p-electrode side face of the second semiconductor laser LD2 in a predetermined distance apart relation.

More specifically, the first semiconductor laser LD1 is fabricated as follows.

Using the MOCVD method, on the n-GaAs (001) substrate, formed are the n-GaAs buffer layer, the n-cladding layer of thickness 1.8 µm of n-(Al_{0.7}Ga_{0.3})_{0.5}In_{0.5}P, the strained quantum well active layer made up of the barrier layer of thickness 50Å of (Al_{0.5}Ga_{0.5})_{0.5}In_{0.5}P and the well layer of thickness 70Å of Ga_{0.58}In_{0.42}P, the ridge stripe shaped p-cladding layer of thickness 1.0 µm of p-(Al_{0.7}Ga_{0.3})_{0.5}In_{0.5}P, and the conducting layer of p-Ga_{0.5}In_{0.5}P. Furthermore, the current blocking layer of n-GaAs is formed on both sides of the ridge stripe, and the contact layer of thickness 2.0 µm of p-GaAs is formed on top of the ridge stripe and the current blocking layer. Furthermore, the p-electrode of Au-Zn is formed on the contact layer, and the n-electrode of Cr/Au is formed on the n-GaAs substrate, thereby completing the first semiconductor laser LD1 that provides emission in the TM polarization in a range about a wavelength of 635 nm.

On the other hand, the second semiconductor laser LD2 is fabricated as follows. Using the MOCVD method, on the sapphire (0001) substrate, formed are the AlN buffer layer, the underlying layer of thickness 20 µm of n-GaN, the n-cladding layer of thickness 0.8 µm of n-Al_{0.08}Ga_{0.92}N, the n-guiding layer of thickness 0.2 µm of n-GaN, the multi quantum well active layer made up of the barrier layer of In_{0.01}Ga_{0.99}N and the well layer of In_{0.08}Ga_{0.92}N, the electron barrier layer of thickness 0.02 µm of AlGaN, and the ridge stripe shaped p-guiding layer of thickness 0.2 µm of p-GaN, the p-cladding layer of thickness 0.4 µm of p-Al_{0.08}Ga_{0.92}N, and the p-contact layer of thickness 0.1 µm of p-GaN. Furthermore, an insulating layer of SiO₂ is formed on other than the contact layer, thereby completing the second semiconductor laser LD2 that provides emission in the TE polarization in a range about a wavelength of 405 nm. Subsequently, the p-electrode of the first semiconductor laser LD1 is affixed to the p-electrode side face of the second semiconductor laser LD2 using Au and Sn adhesive layers. Then, the reverse side of the sapphire substrate is illuminated with the fourth harmonic of the Nd-YAG laser (at a wavelength of 266 nm) to decompose the GaN underlying layer in the vicinity of the interface with the sapphire substrate, thereby removing the sapphire substrate. Thereafter, an n-electrode of Ti/Au is formed on the GaN underlying layer that has been exposed due to the removal of the sapphire substrate.

The first and second semiconductor lasers LD1 and LD2 thus fabricated are formed into the semiconductor laser assembly as shown in Fig. 3 by affixing the p-electrode of both the lasers to each other using the Au and Sn adhesive layers 64.

### [Polarization diffraction element]

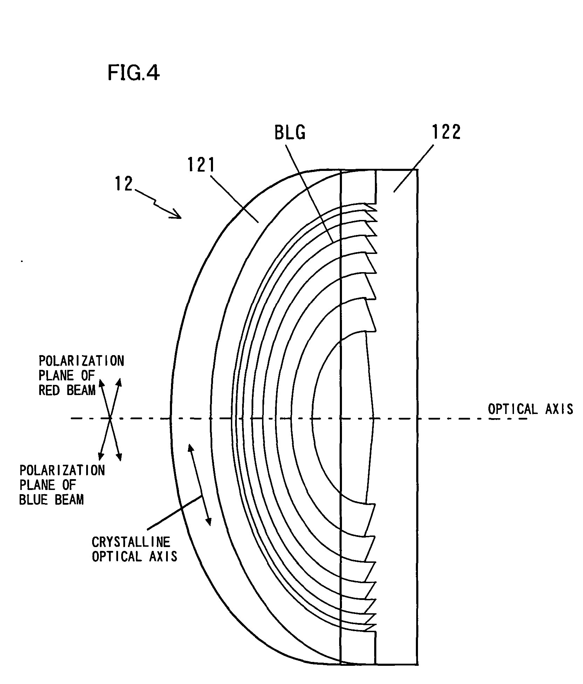

As shown in Fig. 4, by way of example, the polarization diffraction element 12 is formed of pieces of transparent optically anisotropic material film 121 and a transparent substrate 122 for carrying the film, in the shape of a plate with the faces of incidence and transmission being a parallel plane. The optically anisotropic material film 121 is birefringence polymeric film such as polyacethylene or polyester film. The substrate 122 is made of an optically isotropic material such a glass or plastics. Alternatively, without using the optically isotropic material substrate, a lithium niobate substrate can be employed for the thick optically anisotropic material film 121 as a substrate.

The optically anisotropic material film 121 is provided with a diffraction grating BLG having fine groove and ridge portions on its principal face (or an interface). The diffraction grating BLG may be previously deposited on the optically isotropic material substrate and then filled with an optically anisotropic material. For example, the optically anisotropic material film 121 can also be formed so that the crystalline optical axis extends along its principal plane. The diffraction grating BLG is formed so as to serve as a convex lens (or a concave lens) in a hologram pattern of concentric groove and ridge portions within an effective radial area around the optical axis of light beams.

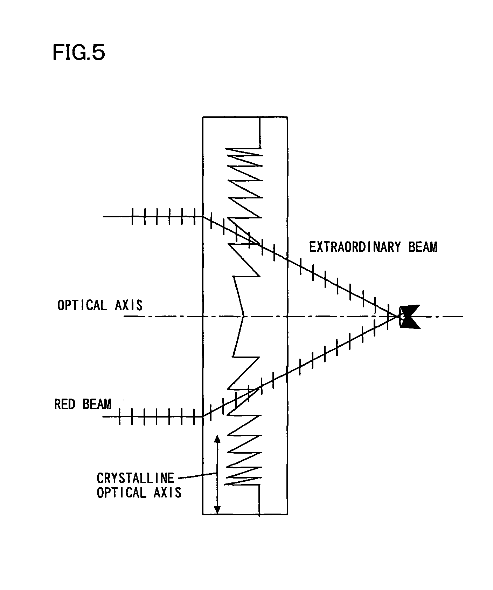

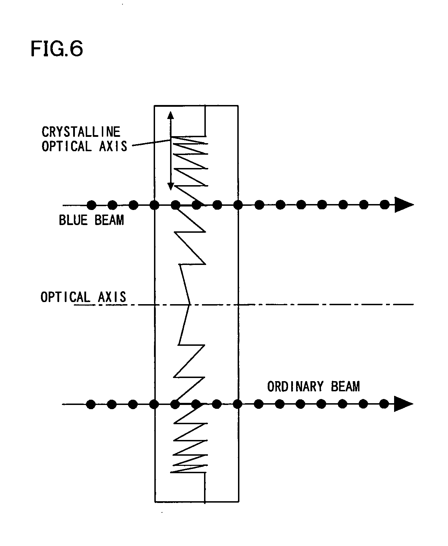

For example, as shown in Fig. 4, the optically anisotropic material film 121 is disposed on an optical source side with respect to the optical axis of a light beam so that the crystalline optical axis of the optically anisotropic material film 121 is arranged in the direction along the principal plane thereof. In this case, as shown in Figs. 5 and 6, a light beam incident on the principal plane at a right angle is split into ordinary and extraordinary beams. In this context, for the optically isotropic material substrate 122 with a refractive index equal to that for the ordinary beam in the optically anisotropic material film 121, the polarization diffraction element 12 is arranged such that the polarization direction of the red beam is oriented in the same direction as the polarization direction in which the optically anisotropic material film 121 works, and is orthogonal to the polarization direction of the blue beam.

That is, suppose that the principal polarization plane of one beam is inclined, e.g., by 90 degrees with respect to the principal polarization plane of the other beam. In this case, as shown in Fig. 5, the optically anisotropic material film 121 serves as a Fresnel lens (convex lens) in one or a first orientation (parallel to the drawing plane and indicated by crosses "+"), while being isotropic as a whole and equivalent to a simple transparent parallel flat plate in the other or a second orientation (perpendicular to the drawing plane and indicated by black circles "●" ) as shown in Fig. 6. Since the extraordinary and ordinary beams are produced unless the direction of the light beam is parallel to the optical axis of the optically anisotropic material film 121, the optical axis of a unitary crystal optically anisotropic material should be inclined with respect to the direction of incidence of the light beam.

The diffraction grating BLG is blaze-shaped or saw tooth shaped, or alternatively stepped or rectangular in cross section. For example, a diffraction grating saw tooth shaped in cross section is advantageously higher in diffraction efficiency than any other ones. A diffraction grating BLG in a concentric pattern is provided with a pitch and a depth of the blaze determined by design. The diffraction grating BLG of the polarization diffraction element 12 is designed to have a grating depth that will not cause any diffraction to the red beam. The finer the pitch of the diffraction grating, the better the dependence of aberration on wavelength becomes. However, it should be noted that the diffraction efficiency would significantly decrease in principle with the pitch being five times or less than the wavelength. Additionally, finer pitches would be more affected by discrepancy in shape.

The diffraction grating BLG can be formed through photolithography or precision machining. Using either of them, it is possible to form a diffraction grating with a multi-stepped pseudo-blaze or a blaze shaped one. It is also possible to form a model of the multi-stepped blaze or blaze shape in a mold in order to reproduce the diffraction grating of a transparent plastic material by an injection molding or an 2P (photo polymer) method, so called. The diffraction grating BLG may also have a flat cross section as a Fresnel zone plate and a refractive index that varies periodically.

Alternatively, the polarization diffraction element 12 can be formed using the volume hologram technique that provides a diffraction grating in the direction of thickness. Illuminating a polyamic acid film having azobenzene in the main chain with a linearly polarized ultraviolet beam of a predetermined wavelength would vary the alignment of polyamic acid molecule chains due to the photo isomerisation reaction of the azobenzene molecules. Thus, since the average orientation of alignment in the polyamic acid molecule chains becomes orthogonal to the polarization of the ultraviolet beam, this film is imidized to fix a polyimide film, thereby providing an organic birefringent film. The polarization diffraction element can also employ a polymer film drawn as an organic birefringent film. The polarization diffraction element 12 can employ the organic birefringent film for high diffraction efficiency.

Furthermore, the refractive power (divergence angle) of the polarization diffraction element 12 of a convex lens type is preferably determined using the ratio between two numerical apertures employed, e.g., based on the ratio between an NA required for reading DVDs (typically, about 0.65) and an NA of 0.85 for reading BDs). This is because the NA of objective lens can be restricted during reading DVDs. When the two wavelength laser module according to the embodiment is used for the compatible pickup device, this allows the polarization diffraction element of the two wavelength laser module to make the beam divergence angle of the red beam different from that of the blue beam. Thus, especially by reducing the beam divergence angle of the red beam more than that of the blue beam, it is possible to simplify the system and the optical components. For example, suppose that a transmissive liquid crystal panel is provided between an optical source and an objective lens, and an opening reduction mechanism is used to pass a light beam through the entire liquid crystal panel during reading BDs and through only the central portion of the liquid crystal panel during reading DVDs. This would cause an increase in the number of components of the system, and require a high output power optical source to ensure the intensity of light, e.g., for writing on the storage layer of DVD-Rs because the liquid crystal mask blocks part of the circumferential portion of the red beam. However, this embodiment eliminates the need for the opening reduction mechanism. In this embodiment, a reduced red beam from the module is passed through only the vicinity of the optical axis of the objective lens and then converged onto the storage surface of a medium, thus being less affected by aberration and improved in efficiency. Alternatively, in the present embodiment the ratio of the beam divergence angles between the red and blue beams can be made generally equal to the ratio of the numerical apertures between the two objective lenses employed. Additionally, even using a double focus objective lens, so-called, would leave the problem of utilization efficiency of light unsolved, still requiring precision formation of a hologram on the lens surface and highly accurate alignment between the hologram element and the lens. This possibly cause a drop in manufacturing yield; however, this embodiment allows for using an usual objective lens having a high NA, thereby providing the module at low prices. Nevertheless, this is not intended to restrict the use of the double focus objective lens; the double focus objective lens can also be used for a compatible pickup device which employs the two wavelength laser module according to this embodiment.

On the other hand, the hologram pattern of the diffraction grating BLG according to this embodiment may also be designed to have such aberration that would cancel out the spherical aberration caused by a light beam passing through the objective lens and the cover layer (a protective layer for the storage layer).

### [Examples]

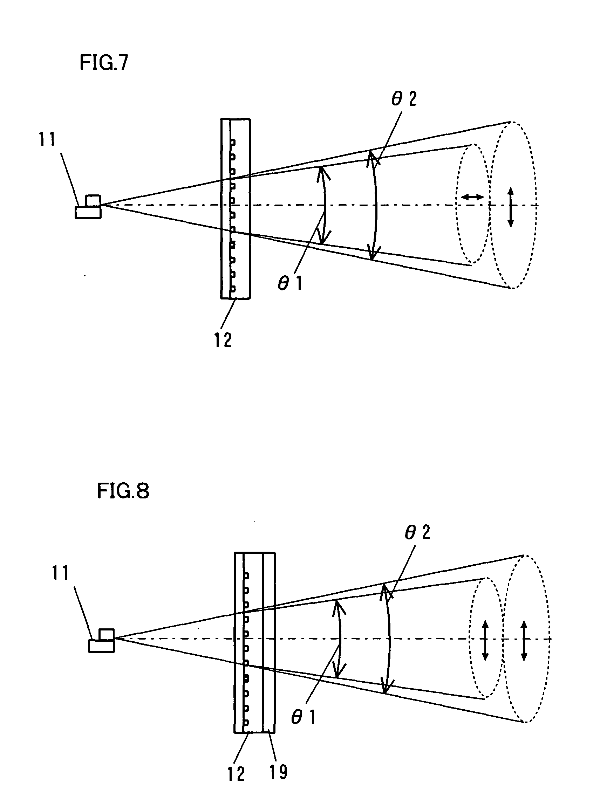

As shown in Fig. 7, a first example was designed to reduce the divergence angle of the red beam using the polarization diffraction element 12 that operates only in the polarization direction perpendicular to the drawing plane (θ1 < θ2). The polarization diffraction element 12 has a diffraction grating shape serving as a convex lens. The polarization diffraction element 12 is also designed to have the lens power that allows the ratio between the focal distance of its combination with a collimator lens and the focal distance of only the collimator lens is generally equal to the NA ratio of the objective lens.

More specifically, this is designed such that (the focal distance of (the polarization diffraction element + the collimator lens)) : (the focal distance of the collimator lens) = (DVD'S NA 0.6) : (BD'S NA 0.85).

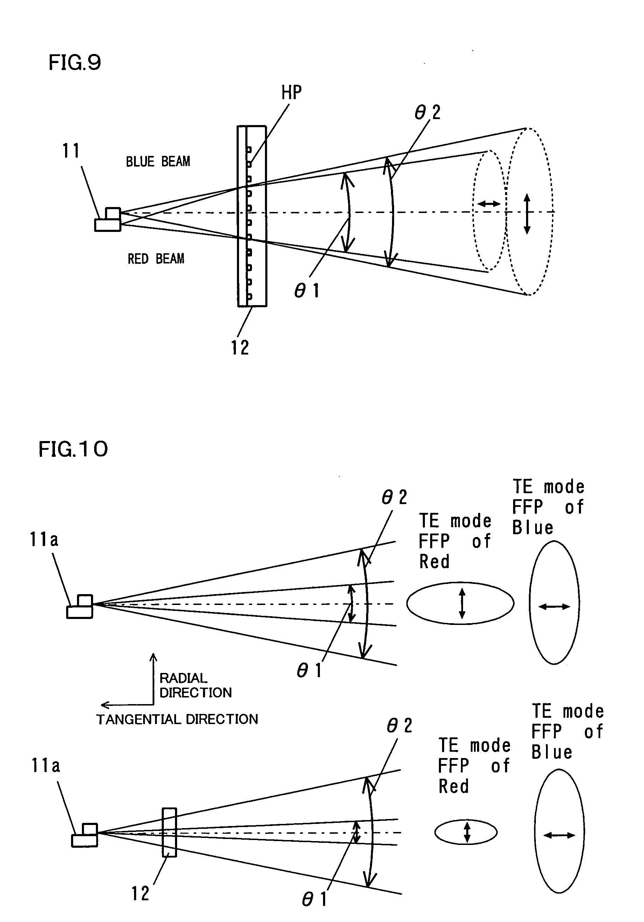

As shown in Fig. 8, a second example was designed such that a wavelength selective half-wave plate 19 was placed after the polarization diffraction element 12. The half-wave plate 19 operates on either of the wavelengths. Since the semiconductor laser assembly 11 emits light beams having polarization directions different from each other, the polarization beam splitter is required to be used in a detection optical system, whereby the two wavelengths can have polarization directions parallel to each other.

As shown in Fig. 9, a third example was designed such that a hologram pattern HP was added to the diffraction grating in the polarization diffraction element 12 to eliminate an offset between the optical axes of light beams projected by the two semiconductor lasers in a case where the two emission points of the semiconductor laser assembly 11 are spaced apart from each other. When the semiconductor laser assembly 11 is positioned with respect to the emission point of the blue wavelength, an offset occurs in the optical axis of the pickup device relative to that of the red beam. The polarization diffraction element 12 is combined with a diffraction grating formed as a hologram pattern serving as a convex lens while eliminating the offset of the optical axis. The hologram pattern HP for correcting for an offset may be formed on a surface separate from one for the lens diffraction grating (a hologram pattern for a convex lens operation of reducing the divergence angle of one wavelength). The semiconductor laser assembly 11 may also be fabricated such that the emission faces of the first and second semiconductor lasers LD1 and LD2 are oriented in directions different from each other. In this case, the first and second semiconductor lasers LD1 and LD2 are disposed such that each of the ridge stripes is oriented at a predetermined angle relative to each other. In this case, the hologram pattern HP for correcting for offsets is preferably designed to enhance the diffraction efficiency of the first order diffracted beam from the red beam.

As shown in Fig. 10, a fourth example is shown in relation to the semiconductor laser assembly 11a in which the two wavelengths have different polarizations and the aspect ratios (used so as to correspond to the radial and tangential directions of the storage medium) of beam radiation patterns (far field patterns or FFP) are different. The polarization diffraction element 12 is provided with a hologram pattern that may act as a convex lens only on one wavelength, e.g., the red beam to be used for DVDs. Accordingly, in BDs, the divergence angle is increased in the radial direction rather than in the tangential direction of the storage medium. For DVDs, it is possible to produce FFPs such that the divergence angle is increased in the tangential direction rather than in the radial direction. The semiconductor laser assembly 11a and the polarization diffraction element 12 allow the aspect orientations of beam cross-section to be different from each other by 90 degrees at the objective pupils between BDs and DVDs. The upper and lower views in Fig. 10 correspond to the presence and absence of the polarization diffraction element 12, respectively, showing that the presence of the polarization diffraction element 12 causes only the FFP of the red beam of the TE polarization to be reduced geographically similarly as a whole.

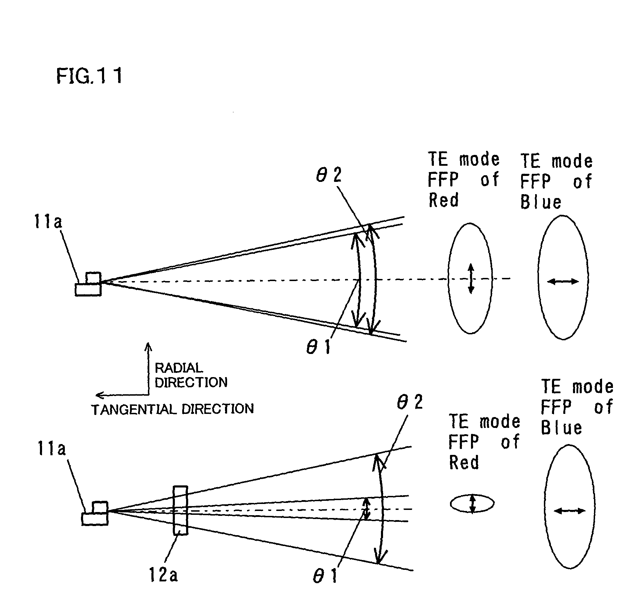

As shown in Fig. 11, a fifth example was intended to realize the effects of the fourth example using the semiconductor laser assembly according to the first to fourth examples. It is to be understood that the polarization diffraction element 12a serves as a convex cylindrical lens to act only on the red beam and reduce the divergence angle only of the wider side of the original beam. That is, the polarization diffraction element 12a is provided with a hologram pattern that serves as a convex cylindrical lens to act only upon the red beam. As a result, it operates so as to provide a difference between the divergence angles and the aspect directions (radial and tangential directions) of the light beams of two wavelengths emitted from the semiconductor laser assembly 11. The upper and lower views in Fig. 11 correspond to the presence and absence of the polarization diffraction element 12a, showing that the presence of the polarization diffraction element 12a causes only the FFP of the red beam of the TE polarization to be reduced only in the radial direction. That is, the polarization diffraction element 12a has such a hologram pattern that causes the aspect ratio of the beam radiation pattern of the red beam passing therethrough to vary.

In either of the examples above, the ratio of divergence angles is set to be generally equal to the NA ratio of the objective lenses used at respective wavelengths. This results in ensuring a coupling effect up to the objective lens in the optical system for each wavelength, thus making it possible to ensure power recording on each storage medium.

As can be seen from the foregoing, the examples are focused on the fact that in a compatible pickup device employing one objective lens for two wavelengths, a storage medium corresponding to the longer wavelength has a smaller NA, while a storage medium corresponding to the shorter wavelength has a larger NA. As a result, the polarization diffraction element 12 is characterized by reducing the divergence angle of only the longer wavelength.

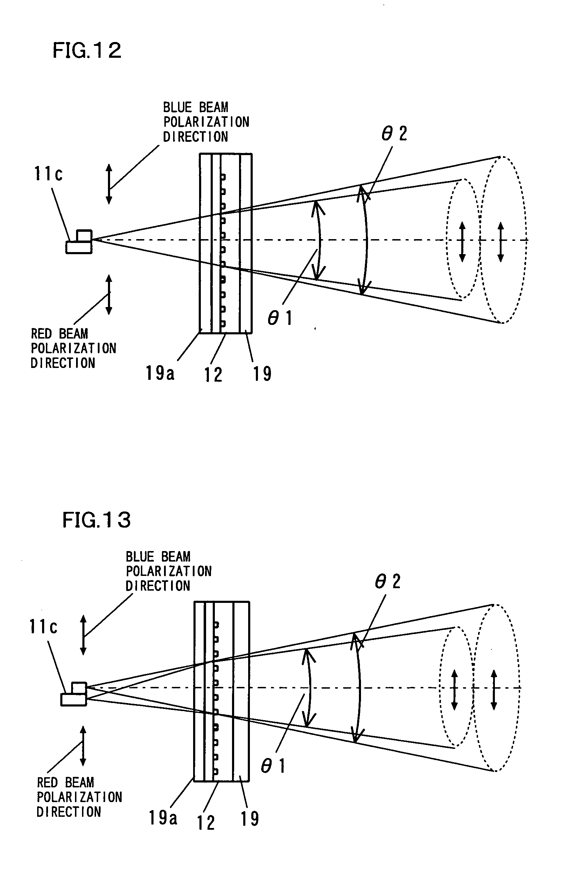

Fig. 12 shows a sixth example which employs two semiconductor laser assemblies 11c for emitting light beams having the same polarization direction. In this case, to allow a hologram to act upon either one of them, the one is provided on the incidence side of the light beam with a wavelength selective half-wave plate 19a. This allows for changing the polarization direction for each wavelength, thereby enabling the polarization diffraction element 12 to act upon the one wavelength. In Fig. 12, the wavelength selective half-wave plate 19a is disposed on the emission face side to make the polarization direction of the emitted light beams parallel to each other.

Furthermore, Fig. 13 shows a seventh example which employs two semiconductor laser assemblies 11c for emitting light beams having the same polarization direction. In this case, when the semiconductor laser assembly 11 has two different emission points, a hologram pattern is additionally provided to the polarization diffraction element 12 to eliminate an offset in optical axis between the two semiconductor lasers and one of them is provided on the incidence side with a wavelength selective half-wave plate 19a. This allows for changing the polarization direction for each wavelength, thereby enabling the polarization diffraction element 12 to act upon the one wavelength. For the sixth and seventh examples, the semiconductor laser assembly having a different polarization direction corresponds to the combination of the half-wave plate 19a and the semiconductor laser assembly 11c.

### [Pickup device]

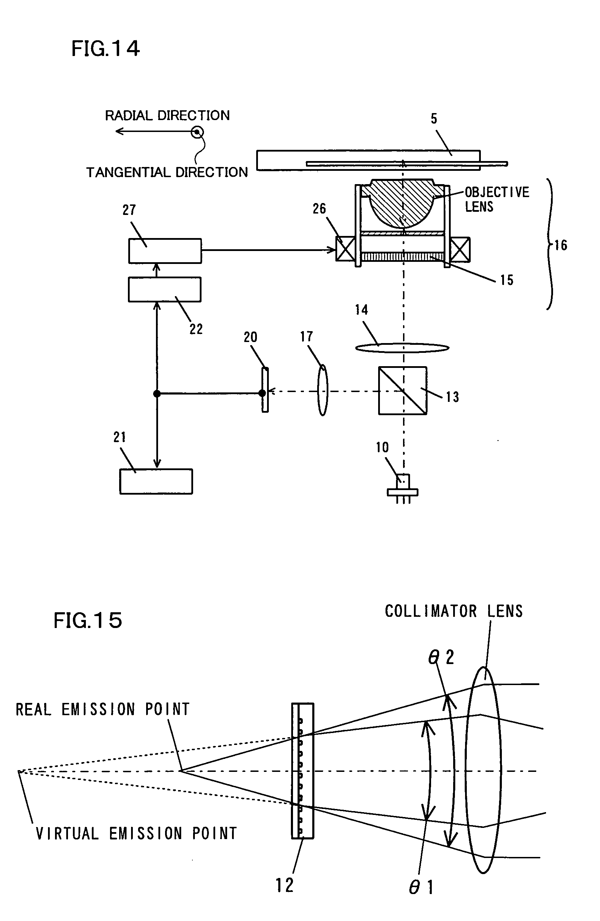

Fig. 14 is a schematic view illustrating, by way of example, an optical pickup device.

Downstream of the two wavelength laser module 10, the pickup device includes a polarization beam splitter 13, a collimator lens 14, and an objective lens unit 16. An objective lens in the objective lens unit 16 is a double focus lens, providing focal point positions different from each other according to two wavelengths. The objective lens unit 16 also includes a quarter-wave plate 15, compatible components and the like. This illumination optical system allows a light beam to be collimated at the collimator lens 14 via the polarization beam splitter 13, and then converged by the objective lens unit 16 towards an optical disc 5 placed in the vicinity of a focal point thereof, being formed into an optical spot on the pit trains of the information storage surface of the optical disc 5. Either a DVD (including DVD-Rs) or a BD (including a BD-Rewritable) is used as the storage medium 5, which is placed on a turntable (not shown). The two wavelength laser module 10 includes an assembly of a short wavelength second semiconductor laser and a medium wavelength first semiconductor laser, which are generally coaxial with each other, and a polarization diffraction element. The second semiconductor laser has a second wavelength around 405 nm and the first semiconductor laser has a first wavelength around 635 nm longer than the second wavelength. The semiconductor lasers LD1 and LD2 are switched to provide emission for use with DVDs or BDs. As used herein, the term "optical axis" refers to an axial line which extends along the direction of propagation of a light beam between the emission point and the center of the objective lens unit 16. Thus this example of the pickup device, which is provided with the two emission points of the first and second semiconductor lasers LD1 and LD2 and a single objective lens unit 16, has two different optical axes in paralleled. In an alternate example, it is possible to bring the two optical axes into one at a given point.

In addition to the aforementioned illumination optical system, the pickup device is further provided with a beam detection optical system, which includes a detection condenser lens 17 and also makes use of the objective lens unit 16, the quarter-wave plate 15, and the polarization beam splitter 13. A reflected light beam from the optical disc 5, a DVD or BD, is collected at the objective lens unit 16 and then directed to the detection condenser lens 17 by the polarization beam splitter 13 via the quarter-wave plate 15. The converged beam condensed at the detection condenser lens 17 passes, e.g., through an astigmatism generation element (not shown) such as a cylindrical lens or a multi-lens, and is then formed into an optical spot, e.g., in the vicinity of the center of a light-receiving surface 20 on a quadrant split optical detector, which has quadrant split light-receiving surfaces defined by two line segments intersecting each other.

The light-receiving surface 20 of the optical detector is also connected to a controller 21, which includes a demodulator circuit, and an error detection circuit 22. The error detection circuit 22 is connected to a drive circuit 27 for driving a mechanism which includes an actuator 26 for providing tracking control and focus control to the objective lens unit.

The quadrant split optical detector supplies an electric signal to the controller 21 and the error detection circuit 22 in accordance with an optical spot image formed in the vicinity of the center of a light-receiving surface 20. The demodulator circuit of the controller 21 generates a recording signal in accordance with the electrical signal. Also in accordance with the electrical signal, the error detection circuit 22 generates a focus error signal, a tracking error signal, and other servo signals to supply each drive signal to each actuator via the actuator's drive circuit 27. Each actuator provides servo control to the objective lens unit 16 or the like in accordance with each drive signal.

### [Other Examples]

In the aforementioned example, one polarization diffraction element was used to change the divergence angle of the red beam. In this case, as shown in Fig. 15, the red beam behaves like a light beam emitted from a virtual emission point, thereby substantially causing the emission point to be offset in the direction of the optical axis. Thus, suppose that a collimator lens is placed to provide a collimated beam. In this case, the blue beam is collimated but the red beam transmitted from the collimator lens will be converged.

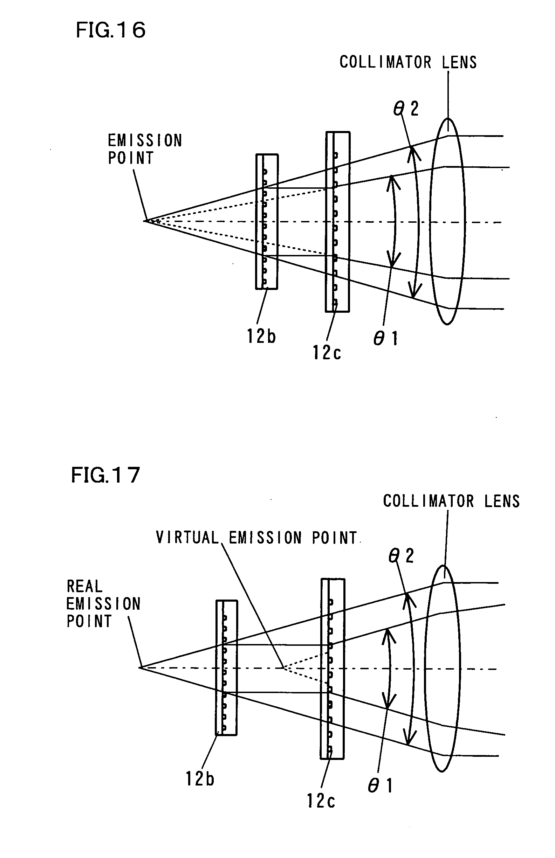

In an alternate example, suppose that both the red and blue beams are to be collimated in a pickup device for an optical disc. In this case, as shown in Fig. 16, two polarization diffraction elements, i.e., a polarization diffraction element 12b having a convex lens effect and a polarization diffraction element 12c having a concave lens effect may be disposed in the optical axis from the optical source side to allow the virtual emission point of the red beam to coincide with the emission point of the blue beam. In this case, the collimator lens is preferably an achromatic lens.

As described above, the two polarization diffraction elements 12b and 12c are placed, thereby allowing for freely controlling the position of the virtual emission point of the red beam and thus freely controlling the divergence angle of the red and blue beams after having transmitted from the collimator. In a further alternate example, as shown in Fig. 17, the virtual emission point of the red beam can be brought in front of the emission point of the blue beam, thereby allowing only the red beam to diffuse.

A compatible pickup device available for use with a plurality of storage media may meet the following needs: a need to allow a collimated beam to impinge upon the objective lens upon reading or writing signals on a storage medium using a blue optical source (i.e., using an infinite optical system), and a need to allow a diffused beam to impinge upon the objective lens upon reading or writing signals on a storage medium using a red optical source (i.e., using a finite optical system). In these cases, the method of using two polarization diffraction elements is still effective.

Furthermore, in the aforementioned examples, the semiconductor laser assembly was provided with two emission points different in wavelength from each other. However, the present invention is not limited thereto but may also be applied to a semiconductor laser assembly which is provided with three or more emission points different in wavelength from each other. Still furthermore, in the aforementioned implementations, the blaze hologram was used as a polarization diffraction element; however, the present invention is not limited thereto but other diffractive optical elements can also be used.

Furthermore, in the aforementioned examples, a hybrid semiconductor laser assembly was used; however, the present invention is not limited thereto but a monolithic semiconductor laser assembly may also be used which is fixed to an insulating sub mount.

As described above, the present invention allows an optical system to be made compact and configured in a concentrated manner, thereby providing a simplified configuration and a reduced size for a pickup device. It is also made possible to correct for a variation in intensity distribution of light caused by two semiconductor lasers emitting light beams at different points, thereby allowing each of the red and blue beams to form a spot of an appropriate intensity distribution on a light-receiving surface of an optical detector. Accordingly, this enables either of the light beams to provide an accurate read signal to the optical detector. It is also possible for a quadrant split optical detector to deliver output so that focus and tracking error signals can be accurately detected according to the astigmatism and phase difference methods, respectively.

It is understood that the foregoing description and accompanying drawings set forth the preferred embodiments of the invention at the present time. Various modifications, additions and alternative designs will, of course, become apparent to those skilled in the art in light of the foregoing teachings without departing from the spirit and scope of the disclosed invention. Thus, it should be appreciated that the invention is not limited to the disclosed embodiments but may be practiced within the full scope of the appended claims.
In summary, an embodiment of the invention can be described as follows:
A two wavelength laser module is made up of a semiconductor laser assembly that includes a first semiconductor laser for emitting a first light beam of a first polarization direction and a second semiconductor laser for emitting a second light beam of a second polarization direction. The second light beam is emitted approximately in the same direction as that of the first light beam and has a shorter wavelength than that of the first light beam. The first and second semiconductor lasers are disposed on a substrate. The module includes a polarization diffraction element for causing a divergence angle of the first light beam to differ from that of the second light beam.

## Claims

1. A two wavelength laser module with a semiconductor laser assembly comprising:
a first semiconductor laser for emitting a first light beam of a first polarization direction;
a second semiconductor laser for emitting a second light beam of a second polarization direction, the second light beam being emitted approximately in the same direction as that of the first light beam and having a shorter wavelength than that of the first light beam;
a substrate for supporting the first and second semiconductor lasers; and
a polarization diffraction element for causing a divergence angle of the first light beam to differ from that of the second light beam.

2. The two wavelength laser module according to claim 1, wherein
the polarization diffraction element has an optical element function of being sensitive only to the first light beam and causing the divergence angle of the first light beam to be less than that of the second light beam.

3. The two wavelength laser module according to claim 1, wherein
the polarization diffraction element has an optical element function of being sensitive only to the second light beam and causing the divergence angle of the second light beam to be greater than that of the first light beam.

4. The two wavelength laser module according to any one of claims 1-3, wherein
the first and second semiconductor lasers are disposed such that the first and second polarization directions are orthogonal to each other.

5. The two wavelength laser module according to any one of claims 1-3, wherein
the first and second polarization directions are at any angle other than a right angle and,
the module has a half-wave plate made sensitive to either the first or second light beam passing therethrough.

6. The two wavelength laser module according to any one of claims 1-5, wherein
the polarization diffraction element is disposed such that primary rays of the first and second light beams intersect each other on a beam transmission face thereof, and
the polarization diffraction element includes a diffraction grating for causing the primary rays of the first and second light beams to coincide with each other after the beam transmission face.

7. The two wavelength laser module according to claim 5, wherein
the first and second polarization directions are at any angle other than a right angle and,
the module has another half-wave plate made sensitive to either the first or second light beam passing therethrough.

8. A two wavelength laser module according to any one of claims 1-7, wherein
the polarization diffraction element has an optical element function of changing an aspect ratio of a beam radiation pattern of either the first or second light beam passing therethrough.

9. The two wavelength laser module according to any one of claims 1-8, further comprising
a second polarization diffraction element disposed between the semiconductor laser assembly and the polarization diffraction element, the second polarization diffraction element being made sensitive only to a beam to which the polarization diffraction element is made sensitive and having an optical element function different from that of the polarization diffraction element.

10. The two wavelength laser module according to any one of claims 1-9, wherein
the polarization diffraction element is formed such that a transparent optically anisotropic material is deposited on a transparent isotropic substrate, a diffraction grating is formed thereon to have groove and ridge portions to serve as a concave lens or a convex lens, and an optically isotropic material is filled in the diffraction grating.

11. An optical pickup device comprising:
a two wavelength laser module with a semiconductor laser assembly including
a first semiconductor laser for emitting a first light beam of a first polarization direction;
a second semiconductor laser for emitting a second light beam of a second polarization direction, the second light beam being emitted approximately in the same direction as that of the first light beam and having a shorter wavelength than that of the first light beam;
a substrate for supporting the first and second semiconductor lasers; and
a polarization diffraction element for causing a divergence angle of the first light beam to differ from that of the second light beam.
